# EUROPEAN PATENT APPLICATION

(11) **EP 3 261 377 A1**
(43) Date of publication of application: **27.12.2017**
(21) Application number: 15882316.1
(22) Date of filing: 16.02.2015
(51) Int. Cl.: H04W 24/00

(54) **CHANNEL STATE MEASUREMENT METHOD, DEVICE AND COMMUNICATION SYSTEM**

(71) Applicant: Fujitsu Limited, Kawasaki-shi, Kanagawa 211-8588 (JP)
(72) Inventor: WANG, Weiwei, Beijing 100025 (CN); WANG, Xin, Beijing 100025 (CN)
(74) Representative: Haseltine Lake LLP
(86) International application number: PCT/CN2015/073193
(87) International publication number: WO 2016/131176

(57) **Abstract**

Embodiments of this disclosure provide a channel state measurement method and apparatus and a communication system. The method includes: determining whether a downlink transmission point of a certain user equipment in a subframe is changed; configuring related information of channel state measurement of the subframe in a case where a determined result of the determining unit is yes; and notifying the related information to one or more UEs within a range of the base station, such that the one or more UEs perform channel state measurement according to the related information. With the embodiments of this disclosure, the user equipment is able to accurately perform channel state measurement even though the downlink transmission point is changed subframe by subframe.

## Description

### Technical Field

This disclosure relates to the field of communication technologies, and in particular to a channel state measurement method and apparatus and a communication system.

### Background

Currently, uplink and downlink configuration of a transmission point in a long term evolution (LTE) system is changed frame by frame at most. Ten subframes are contained in one frame, and in one frame, uplink and downlink configuration of each subframe will not be changed. In order to perform correct channel state measurement, different types of channel state measurement information is preconfigured at a network side before the change of the uplink and downlink configuration of the transmission point, each type corresponding to such information as different measured subframe locations, different measured resource configuration, and different measurement methods, etc.

Therefore, in an existing scheme, uplink and downlink configuration of a transmission point on which channel state measurement is based is changed frame by frame. Hence, configuration information of the frames may be preconfigured for the user equipment, and then the user equipment performs measurement on corresponding frame based on corresponding measurement configuration according to the configuration information.

It should be noted that the above description of the background is merely provided for clear and complete explanation of this disclosure and for easy understanding by those skilled in the art. And it should not be understood that the above technical solution is known to those skilled in the art as it is described in the background art of this disclosure.

### Summary

It was found by the inventor that in order to improve a capacity of a system, the system will allow uplink and downlink configuration of a transmission point to be changed subframe by subframe. However, in an existing mechanism, as channel state measurement information of the frame has been preconfigured at a network side, if the uplink and downlink configuration of the transmission point is changed in a certain subframe, the user equipment is unable to learn related information of the channel state measurement configuration of the subframe in advance, which may result in inaccuracy of the measurement. There is no solution in the prior art.

Embodiments of this disclosure provide a channel state measurement method and apparatus and a communication system, in which a base station determines whether a downlink transmission point of a certain user equipment in a subframe is changed, and configures related information of channel state measurement of the subframe if it is changed, such that user equipment performs channel state measurement according to the related information. Hence, the user equipment is able to accurately perform channel state measurement even though the downlink transmission point is changed subframe by subframe.

According to a first aspect of the embodiments of this disclosure, there is provided a channel state measurement apparatus, configured in a base station, the apparatus includes:
a determining unit configured to determine whether a downlink transmission point of a certain user equipment (UE) in a subframe is changed;
a configuring unit configured to configure related information of channel state measurement of the subframe in a case where a determined result of the determining unit is yes; and
a notifying unit configured to notify the related information to one or more UEs within a range of the base station, such that the one or more UEs perform channel state measurement according to the related information.

According to a second aspect of the embodiments of this disclosure, there is provided a channel state measurement apparatus, configured in a user equipment, the apparatus includes:
a receiving unit configured to receive related information of channel state measurement of a subframe notified by a base station in a case where the base station determines that a downlink transmission point of a certain user equipment in the subframe is changed; and
a processing unit configured to perform channel state measurement according to the related information.

According to a third aspect of the embodiments of this disclosure, there is provided a communication system, including:
a base station configured to determine whether a downlink transmission point of a certain user equipment in a subframe is changed, configure related information of channel state measurement of the subframe in a case where a determined result is yes, and notify the related information to one or more UEs within a range of the base station, such that the one or more UEs perform channel state measurement according to the related information; and
the user equipment configured to receive the related information notified by the base station, and perform channel state measurement according to the related information.

According to a fourth aspect of the embodiments of this disclosure, there is provided a computer readable program code, which, when executed in a user equipment, will cause a computer unit to carry out the channel state measurement method as described above in the user equipment.

According to a fifth aspect of the embodiments of this disclosure, there is provided a computer readable medium, including a computer readable program code, which will cause a computer unit to carry out the channel state measurement method as described above in a user equipment.

According to a sixth aspect of the embodiments of this disclosure, there is provided a computer readable program code, which, when executed in a base station, will cause a computer unit to carry out the channel state measurement method as described above in the base station.

According to a seventh aspect of the embodiments of this disclosure, there is provided a computer readable medium, including a computer readable program code, which will cause a computer unit to carry out the channel state measurement method as described above in a base station.

An advantage of the embodiments of this disclosure exists in that the base station determines whether the downlink transmission point of a certain user equipment in a subframe is changed, and configures related information of channel state measurement of the subframe if it is changed, such that user equipment performs channel state measurement according to the related information. Hence, the user equipment is able to accurately perform channel state measurement even though the downlink transmission point is changed subframe by subframe.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of this disclosure. To facilitate illustrating and describing some parts of the invention, corresponding portions of the drawings may be exaggerated or reduced.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of an application scenario where uplink and downlink configuration of a transmission point in an LTE system is changed frame by frame;
FIG. 2 is a schematic diagram of an application scenario where uplink and downlink configuration of a transmission point is changed subframe by subframe in an embodiment of this disclosure;
FIG. 3 is a flowchart of the channel state measurement method of Embodiment 1 of this disclosure;
FIG. 4 is another flowchart of the channel state measurement method of Embodiment 2 of this disclosure;
FIG. 5 is a schematic diagram of a structure of the channel state measurement apparatus of Embodiment 3 of this disclosure;
FIG. 6 is a schematic diagram of a structure of the base station of Embodiment 3 of this disclosure;
FIG. 7 is a schematic diagram of a structure of the channel state measurement apparatus of Embodiment 4 of this disclosure;
FIG. 8 is a schematic diagram of a structure of the user equipment of Embodiment 4 of this disclosure; and
FIG. 9 is a schematic diagram of a structure of the communication system of Embodiment 5 of this disclosure.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In this embodiment, uplink and downlink configuration of a transmission point being changed subframe by subframe is taken as an application scenario. Such an application scenario shall be first illustrated below.

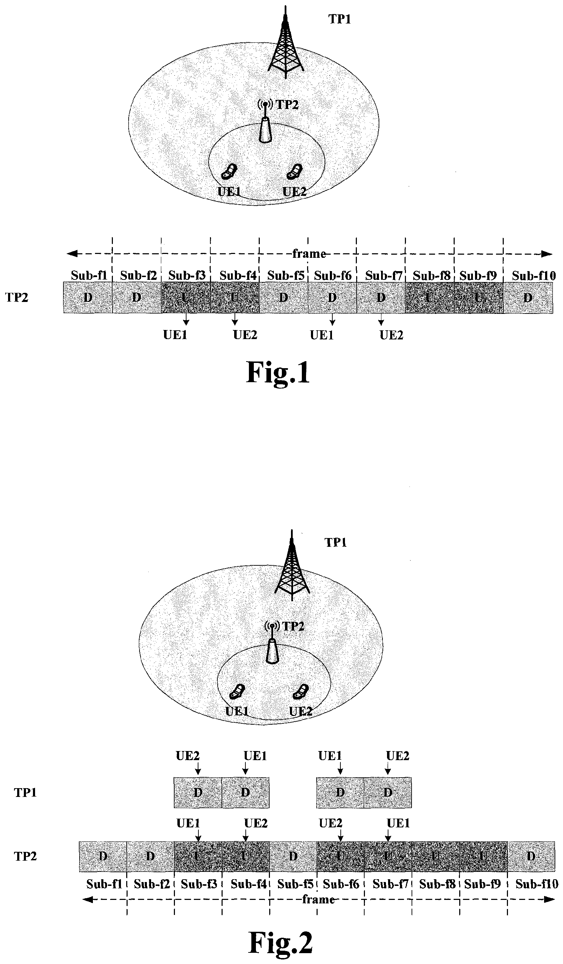

FIG. 1 is a schematic diagram of an application scenario where uplink and downlink configuration of a transmission point in an LTE system is changed frame by frame, and FIG. 2 is a schematic diagram of an application scenario where uplink and downlink configuration of a transmission point is changed subframe by subframe in the embodiment of this disclosure.

As shown in FIGs. 1 and 2, there are two transmission points (TPs) covering different areas in the figures: TP1 and TP2. TP1 and TP2 may serve for different cells (two cells having different cell IDs) or serve for the same cell (coverage areas of the two TPs have identical cell IDs).

In FIG. 1, user equipment 1 (UE1) and UE2 are served by TP2 according to specific uplink and downlink configuration, such configuration being changed frame by frame (including ten subframes), that is, in FIG. 1, once uplink and downlink configuration of a frame is given, the configuration will not be changed before the end of the frame.

While in FIG. 2, uplink and downlink configuration of the TPs is changed subframe by subframe, rather than frame by frame, for example:
in a case, in FIG. 1, UE1 and UE2 are served by TP2 via uplink respectively at a third subframe and a fourth subframe; correspondingly, in FIG. 2, when UE1 is served by TP2 via uplink at the third subframe, UE2 may be served by TP1 via downlink; likewise, when UE2 is served by TP2 via uplink at the fourth subframe, UE1 may be served by TP1 via downlink; that is, uplink and downlink configuration of UE2 at the third subframe is changed (the TP is also changed with it), while uplink and downlink configuration of UE1 at the fourth subframe is changed (the TP is also changed with it);
in another case, in FIG. 1, UE1 and UE2 are served by TP2 via downlink respectively at a sixth subframe and a seventh subframe; correspondingly, in FIG. 2, the downlink serving point of UE1 and UE2 at the sixth subframe and the seventh subframe is changed into TP1, and at the same time, UE2 and UE1 are served by TP2 via uplink respectively at the sixth subframe and the seventh subframe.

It is shown in the above two cases that the uplink and downlink configuration of the TP is changed subframe by subframe, and in order that the UE is able to accurately perform channel state measurement in a mechanism in which the uplink and downlink configuration of the subframe TP is dynamically changed, this embodiment provides the following channel state measurement method. How to perform channel state measurement shall be described below in detail.

### Embodiment 1

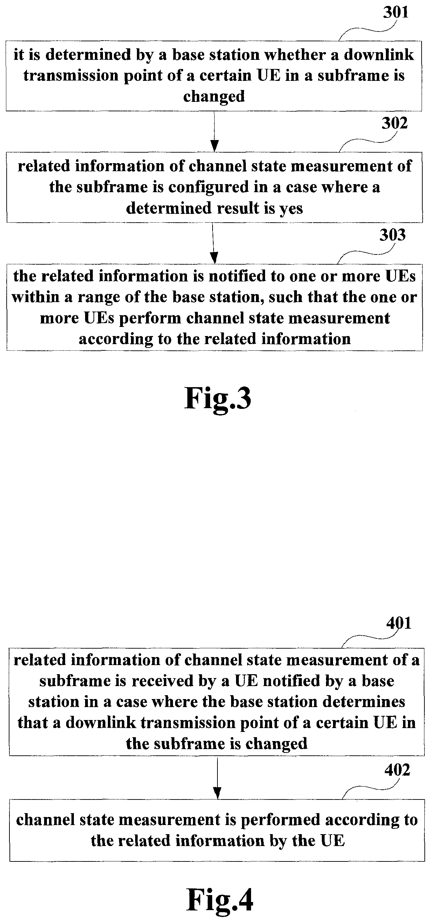

Embodiment 1 of this disclosure provides a channel state measurement method, which shall be described from a base station side. FIG. 3 is a flowchart of the channel state measurement method of Embodiment 1 of this disclosure. As shown in FIG. 3, the method includes:
step 301: it is determined by a base station whether a downlink transmission point of a certain user equipment in a subframe is changed;
step 302: related information of channel state measurement of the subframe is configured in a case where a determined result is yes; and
step 303: the related information is notified to one or more UEs within a range of the base station, such that the one or more UEs perform channel state measurement according to the related information.

In this embodiment, as the TP is changed subframe by subframe, the base station determines in advance whether there exists UE of which a downlink TP is changed in a subframe, and configures the related information of channel state measurement of the subframe in a case where a determined result is yes, such that the user equipment is able to accurately perform channel state measurement on a corresponding subframe.

In step 301 of this embodiment, it may be particularly included that: determining by the base station that a downlink transmission point of the user equipment in a subframe is changed in a case where the downlink TP of the user equipment in the subframe is changed from a first TP into a second TP, or the user equipment is changed from uplink serving by a first TP into downlink serving by a second TP in the subframe.

For example, as shown in FIGs. 1 and 2, in the sixth subframe and the seventh subframe, the downlink TP of UE1 and UE2 is changed from TP2 into TP1, which shows that in the sixth subframe and the seventh subframe, the downlink TP of UE1 and UE2 is changed; or, in the third subframe, UE1 is changed from uplink serving by TP2 into downlin serving by TP1, and in the fourth subframe, UE2 is changed from uplink serving by TP2 into downlink serving by TP1, which shows that in the third subframe and the fourth subframe, the downlink TP of UE1 and UE2 is changed.

In this embodiment, the base station may perform the determination in step 301 before the frame or within the frame, and this embodiment is not limited thereto.

The channel state measurement may be divided into multiple different types, each type corresponding to information on different channel state measurement, and corresponding to each type, the UE need to perform independent measurement. Hence, when a downlink transmission point of the user equipment in a subframe is changed, the base station needs to notify configuration information of channel state measurement of the subframe to the UE.

In this embodiment, the configuration information may include one or more pieces of following information: information on a measured resource for the subframe, information on a measured signal transmitted on the measured resource, information on a type of the channel state measurement, information on processing of the channel state measurement, and information on reporting of the channel state measurement, etc.

The information on a measured resource for the subframe denotes which resources in the subframe shall be measured by the UE, for example, the information on a measured resource includes: a time domain location, a frequency domain location, or a spatial domain location, of a resource measured by the user equipment; or indicates a preconfigured set of subframes to measurement of which the measurement of the subframe is identical, hence, the preconfigured set of subframes denotes a location of the measured resource for the subframe.

The information on a measured signal transmitted on the measured resource denotes which type of signals are to be measured by the UE, such as information on a cell-specific reference signal (CRS), or a channel state information reference signal (CSI-RS), or a demodulation reference signal (DM-RS), or a UE-specific reference signal (information on a sequence of a signal, and information on power, etc.).

The information on a type of the channel state measurement denotes a parameter needing to be measured by the UE, such as interference measurement, signal to interference and noise ratio measurement, or signal strength measurement, etc.

The information on processing of the channel state measurement denotes information on a method for processing a measurement result by the UE, such as averaging a measurement result of the subframe and a previous measurement result of the same category, averaging a measurement result of the subframe and a previous measurement result of the same category within a predefined time period or a predefined number of subframes, or overriding a previous measurement result of the same type with a measurement result of the subframe.

The information on reporting of the channel state measurement denotes information on how to report a measurement result by the UE after completing measurement, such as periodic reporting or aperiodic reporting. When the periodic reporting is determined to be used, the base station may specify a reporting period and/or a resource location used by reporting a measurement result (such as reporting a time domain, frequency domain or spatial domain resource location carrying the measurement result for the subframe of the measurement result), and/or a triggering message (the UE starts the periodic reporting of the measurement result after receiving the triggering message), and/or a location where a triggering message is transmitted. When the aperiodic reporting is determined to be used, the information on reporting may include a triggering message (the UE reports the measurement result after receiving the triggering message), and/or a location where a triggering message is transmitted (transmitting at an *n*-*th* subframe), and/or a resource location used by reporting the measurement result (such as an *n*-*th* subframe after receiving the triggering message, and a time domain, frequency domain or spatial domain resource location for the subframe).

In step 302 of this embodiment, when the determined result in step 301 is that the downlink transmission point is changed, the base station configures the related information of the channel state measurement of the subframe. The related information includes configuration information of the channel state measurement, or indication information corresponding to the configuration information, or configuration information of the channel state measurement and indication information corresponding to the configuration information. The above three implementations shall be described below, respectively.

In an implementation, the related information includes configuration information of the channel state measurement, and in step 302, the base station directly configures the configuration information, such as one or more pieces of information on a measured resource for the subframe, information on a measured signal transmitted on the measured resource, information on a type of the channel state measurement, information on processing of the channel state measurement, and information on reporting of the channel state measurement, and in step 303, the base station notifies the configuration information configured in step 302 to the UE, and the UE performs the channel state measurement according to the configuration information.

In another implementation, the related information includes indication information corresponding to the configuration information, and the method further includes: preconfiguring multiple types of different configuration information by the base station. Information contained in these types of configuration information is different. A particular method for configuring the configuration information is as described above, and shall not be described herein any further. Furthermore, the different types are denoted by different indication information. For example, the indication information may be denoted by a channel state information process identity (CSI process ID), and the base station notifies a corresponding relationship between the above configuration information and indication information to the UE in advance. In step 303, the base station notifies the indication information to the UE, and the UE determines corresponding configuration information according to the indication information, and performs channel state measurement according to the configuration information. The base station may configure multiple types of different configuration information before or after step 301, and this embodiment is not limited thereto.

In a further implementation, the related information may include configuration information of the channel state measurement and indication information corresponding to the configuration information. A particular method for configuring the configuration information and the indication information is as described above, and shall not be described herein any further.

In this embodiment, the related information may be carried via a radio resource control (RRC) message or a physical layer message; however, this embodiment is not limited thereto.

In step 303 of this embodiment, the base station may notify the related information to one or more UEs within the range of the base station within or before the subframe. Here, the one or more UEs within the range of the base station include not only the UE of which the downlink transmission point is changed in step 301, but also other UEs. In other words, the UE notified in step 303 is not limited to the UE scheduled in the subframe, but may further include UE that is not scheduled within the range of the base station.

It can be seen from the above embodiment that the base station determines whether a downlink transmission point of a certain user equipment in a subframe is changed, and configures related information of channel state measurement of the subframe if it is changed, such that the user equipment performs channel state measurement according to the related information. Hence, the user equipment is able to accurately perform channel state measurement even though the downlink transmission point is changed subframe by subframe.

### Embodiment 2

An embodiment of this disclosure provides a channel state measurement method, which shall be described from a UE side, with contents identical those in Embodiment 1 being not going to be described herein any further.

FIG. 4 is a flowchart of the channel state measurement method of Embodiment 2 of this disclosure. As shown in FIG. 4, the method includes:
step 401: related information of channel state measurement of a subframe notified by a base station is received by a UE, in a case where the base station determines that a downlink transmission point of a certain user equipment in the subframe is changed; and
step 402: channel state measurement is performed according to the related information by the UE.

In this embodiment, particular implementations of configuration and transmission of the related information are identical those in Embodiment 1, and shall not be described herein any further.

In this embodiment, when the related information is indication information corresponding to configuration information, the method further includes: receiving by the UE in advance the configuration information and a corresponding relationship between the configuration information and the indication information notified by the base station.

In this embodiment, the UE performing the channel state measurement may be a UE of which a downlink transmission point is changed, or may be other UE within the range of the base station, and this embodiment is not limited thereto.

In step 402 of this embodiment, after receiving the related information, the UE performs the channel state measurement according to configuration information and/or indication information to which the configuration information corresponds of the channel state measurement included in the related information.

For example, the UE performs measurement on a corresponding signal on a specified resource as per specified measurement type, and then processes a measurement result according to configured information on processing of a measurement result; thereafter, reports the measurement result according to configured information on reporting of a measurement result. For periodic reporting, if a triggering message is configured, a reporting process will be performed after the triggering message is received, and then the reporting is performed on a specified resource in a configured subframe. And if a triggering message is not configured, the UE will report the result on a specified location according to configuration of the periodic reporting after obtaining the measurement result. And for aperiodic reporting, a reporting process will be performed after the triggering message is received, and the UE will report the measurement result on a specified resource location in a specified subframe.

For example, the configuration information includes: a time domain resource N, a CRS, interference measurement, overriding a previous measurement result of the same type with a measurement result of the subframe, and periodic reporting (a period T, and a resource M for transmitting the measurement result). And the UE needs to measure the resource N for the subframe in performing channel state measurement after receiving the configuration information, with a measured signal being a CRS, performs interference measurement, overrides the previous measurement result of the same type with the measurement result after obtaining the measurement result, and reports the measurement result with the period T on the resource M to the base station. What is described above is illustrative only, the prior art may be referred to for a particular method of measurement by the UE, and this embodiment is not limited thereto.

It can be seen from the above embodiment that the base station determines whether a downlink transmission point of a certain user equipment in a subframe is changed, and configures related information of channel state measurement of the subframe if it is changed, such that the user equipment performs channel state measurement according to the related information. Hence, the user equipment is able to accurately perform channel state measurement even though the downlink transmission point is changed subframe by subframe.

### Embodiment 3

An embodiment of this disclosure provides a channel state measurement apparatus, configured in a base station. The embodiment of this disclosure corresponds to the channel state measurement method of Embodiment 1, with identical contents being not going to be described herein any further.

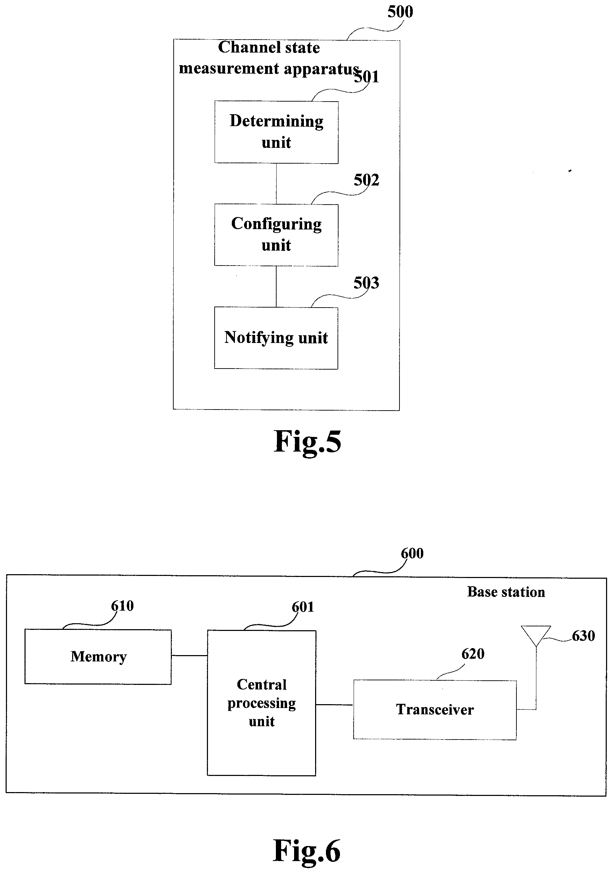

FIG. 5 is a schematic diagram of a structure of the channel state measurement apparatus of the embodiment of this disclosure. As shown in FIG. 5, the apparatus 500 includes a determining unit 501, a configuring unit 502 and a notifying unit 503.

The determining unit 501 is configured to determine whether a downlink transmission point of a certain user equipment in a subframe is changed; the configuring unit 502 is configured to configure related information of channel state measurement of the subframe in a case where a determined result of the determining unit 501 is yes; and the notifying unit 503 is configured to notify the related information to one or more UEs within a range of the base station, such that the one or more UEs perform channel state measurement according to the related information.

In this embodiment, in a case where the downlink transmission point of the user equipment in the subframe is changed from a first transmission point to a second transmission point, or the user equipment is changed from uplink serving by a first transmission point to downlink serving by a second transmission point in the subframe, the determining unit 501 determines that the downlink transmission point of the user equipment is changed in a subframe.

In this embodiment, particular implementations of configuration and transmission of the related information are identical those in Embodiment 1, and shall not be described herein any further.

In this embodiment, when the related information is indication information corresponding to the configuration information, the notifying unit 503 notifies the configuration information and a corresponding relationship between the configuration information and indication information to the UE in advance.

In this embodiment, the notifying unit 503 may notify the related information to the UE within or before the subframe.

The embodiment of this disclosure further provides a base station, including the channel state measurement apparatus 500 as described in the above embodiment.

FIG. 6 is a schematic diagram of a structure of the base station of the embodiment of this disclosure. As shown in FIG. 6, the base station 600 may include a central processing unit (CPU) 601 and a memory 610, the memory 610 being coupled to the central processing unit 601. The memory 610 may store various data, such as configuration information, and furthermore, it may store a program for channel state measurement, and execute the program under control of the central processing unit 601, so that the base station configures related information.

In an implementation, the functions of the channel state measurement apparatus 500 may be integrated into the central processing unit 601. The central processing unit 601 may be configured to carry out the channel state measurement method as described in Embodiment 1. That is, the central processing unit 601 may be configured to perform the following control: determining whether a downlink transmission point of a certain user equipment in a subframe is changed; configuring related information of channel state measurement of the subframe in a case where a determined result is yes; and notifying the related information to one or more UEs within a range of the base station, such that the one or more UEs perform channel state measurement according to the related information.

In an implementation, the channel state measurement apparatus 500 and the central processing unit 601 may be configured separately. For example, the channel state measurement apparatus 500 may be configured as a chip connected to the central processing unit 601, with its functions being realized under control of the central processing unit 601.

Furthermore, as shown in FIG. 6, the base station 600 may include a transceiver 620, and an antenna 630, etc. Functions of the above components are similar to those in the relevant art, and shall not be described herein any further. It should be noted that the base station 600 does not necessarily include all the parts shown in FIG. 6, and furthermore, the base station 600 may include parts not shown in FIG. 6, and the relevant art may be referred to.

It can be seen from the above embodiment that the base station determines whether a downlink transmission point of a certain user equipment in a subframe is changed, and configures related information of channel state measurement of the subframe if it is changed, such that the user equipment performs channel state measurement according to the related information. Hence, the user equipment is able to accurately perform channel state measurement even though the downlink transmission point is changed subframe by subframe.

### Embodiment 4

An embodiment of this disclosure provides a channel state measurement apparatus, configured in UE. The embodiment of this disclosure corresponds to the channel state measurement method of Embodiment 2, with identical contents being not going to be described herein any further.

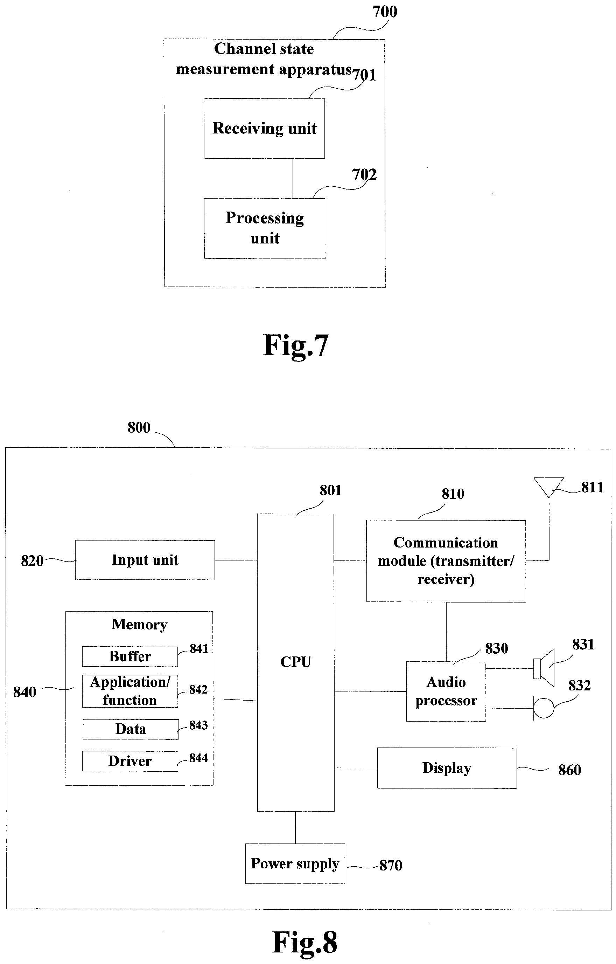

FIG. 7 is a schematic diagram of a structure of the channel state measurement apparatus of the embodiment of this disclosure. As shown in FIG. 7, the apparatus 700 includes: a receiving unit 701 and a processing unit 702.

The receiving unit 701 is configured to receive related information of channel state measurement of a subframe notified by a base station in a case where the base station determines that a downlink transmission point of a certain user equipment in the subframe is changed; and the processing unit 702 is configured to perform channel state measurement according to the related information.

In this embodiment, particular implementations of configuration and transmission of the related information are identical those in Embodiment 1, and shall not be described herein any further.

In this embodiment, when the related information is indication information corresponding to the configuration information, the receiving unit 701 receives in advance the configuration information and a corresponding relationship between the configuration information and indication information notified by the base station.

In this embodiment, Embodiment 2 may be referred to for a particular method for measuring by the processing unit 702, which shall not described herein any further.

The embodiment of this disclosure further provides a UE, including the channel state measurement apparatus 800 as described in the above embodiment.

FIG. 8 is a schematic diagram of a structure of the UE 800 of the embodiment of this disclosure. As shown in FIG. 8, the UE 800 may include a central processing unit 801 and a memory 840, the memory 840 being coupled to the central processing unit 801. It should be noted that this figure is illustrative only, and other types of structures may also be used, so as to supplement or replace this structure and achieve a telecommunications function or other functions.

In an implementation, the functions of the channel state measurement apparatus 700 may be integrated into the central processing unit 801. The central processing unit 801 may be configured to carry out the channel state measurement method as described in Embodiment 2. That is, the central processing unit 801 may be configured to perform the following control: receiving related information of channel state measurement of a subframe notified by a base station in a case where the base station determines that a downlink transmission point of a certain user equipment in the subframe is changed; and performing channel state measurement according to the related information.

In another implementation, the channel state measurement apparatus 700 and the central processing unit 801 may be configured separately. For example, the channel state measurement apparatus 700 may be configured as a chip connected to the central processing unit 801, with its functions being realized under control of the central processing unit 801.

As shown in FIG. 8, the UE 800 may further include a communication module 810, an input unit 820, an audio processor 830, a display 860 and a power supply 870. It should be noted that the UE 800 does not necessarily include all the parts shown in FIG. 8, and furthermore, the UE 800 may include parts not shown in FIG. 8, and the relevant art may be referred to.

As shown in FIG. 8, the central processing unit 801 is sometimes referred to as a controller or control, and may include a microprocessor or other processor devices and/or logic devices. The central processing unit 801 receives input and controls operations of every components of the UE 800.

The memory 840 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 801 may execute the program stored in the memory 840, so as to realize information storage or processing, etc. Functions of other parts are similar to those of the prior art, which shall not be described herein any further. The parts of the UE 800 may be realized by specific hardware, firmware, software, or any combination thereof, without departing from the scope of the present invention.

It can be seen from the above embodiment that the base station determines whether a downlink transmission point of a certain user equipment in a subframe is changed, and configures related information of channel state measurement of the subframe if it is changed, such that the user equipment performs channel state measurement according to the related information. Hence, the user equipment is able to accurately perform channel state measurement even though the downlink transmission point is changed subframe by subframe.

### Embodiment 5

An embodiment of this disclosure provides a communication system, including the base station as described in Embodiment 3 and the UE as described in Embodiment 4, with contents identical to those in embodiments 1-4 being not going to be described herein any further.

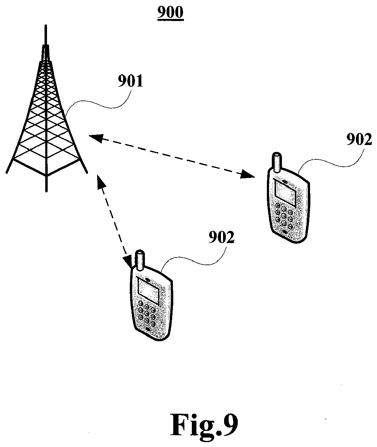

FIG. 9 is a schematic diagram of a structure of the communication system of the embodiment of this disclosure. As shown in FIG. 9, the communication system 900 includes a base station 901 and UE 902;
the base station 901 determines whether a downlink transmission point of a certain user equipment in a subframe is changed, configures related information of channel state measurement of the subframe in a case where a determined result is yes, and notifies the related information to one or more UEs 902 within a range of the base station, such that the one or more UEs 902 performs channel state measurement according to the related information; and the UE 902 receives the related information notified by the base station, and performs channel state measurement according to the related information.

In this embodiment, in a case where the downlink transmission point of the user equipment in the subframe is changed from a first transmission point to a second transmission point, or the user equipment is changed from uplink serving by a first transmission point to downlink serving by a second transmission point in the subframe, the base station 901 determines that the downlink transmission point of the user equipment is changed in a subframe.

In this embodiment, particular implementations of configuration and transmission of the related information are identical those in Embodiment 1, and shall not be described herein any further.

In this embodiment, when the related information is indication information corresponding to the configuration information, the base station 901 notifies the configuration information and a corresponding relationship between the configuration information and indication information to the UE 902 in advance.

In this embodiment, the base station 901 may notify the related information to the UE 902 within or before the subframe.

It can be seen from the above embodiment that the base station determines whether a downlink transmission point of a certain user equipment in a subframe is changed, and configures related information of channel state measurement of the subframe if it is changed, such that the user equipment performs channel state measurement according to the related information. Hence, the user equipment is able to accurately perform channel state measurement even though the downlink transmission point is changed subframe by subframe.

An embodiment of the present disclosure provides a computer readable program code, which, when executed in a base station, will cause a computer unit to carry out the channel state measurement method described in Embodiment 1 in the base station.

An embodiment of the present disclosure provides a computer readable medium, including a computer readable program code, which will cause a computer unit to carry out the channel state measurement method described in Embodiment 1 in a base station.

An embodiment of the present disclosure provides a computer readable program code, which, when executed in a UE, will cause a computer unit to carry out the channel state measurement method described in Embodiment 2 in the UE.

An embodiment of the present disclosure provides a computer readable medium, including a computer readable program code, which will cause a computer unit to carry out the channel state measurement method described in Embodiment 2 in a UE.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A channel state measurement apparatus, configured in a base station, wherein the apparatus comprises:
a determining unit configured to determine whether a downlink transmission point of a certain user equipment (UE) in a subframe is changed;
a configuring unit configured to configure related information of channel state measurement of the subframe in a case where a determined result of the determining unit is yes; and
a notifying unit configured to notify the related information to one or more UEs within a range of the base station, such that the one or more UEs perform channel state measurement according to the related information.

2. The apparatus according to claim 1, wherein in a case where the downlink transmission point of the user equipment in the subframe is changed from a first transmission point to a second transmission point, or the user equipment is changed from uplink serving by a first transmission point to downlink serving by a second transmission point in the subframe, the determining unit is configured to determine that the downlink transmission point of the user equipment is changed in a subframe.

3. The apparatus according to claim 1, wherein the notifying unit is configured to notify the related information to the user equipment within or before the subframe.

4. The apparatus according to claim 1, wherein the related information comprises configuration information of the channel state measurement and/or indication information corresponding to the configuration information.

5. The apparatus according to claim 4, wherein the configuration information comprises one or more pieces of following information:
information on a measured resource for the subframe, information on a measured signal transmitted on the measured resource, information on a type of the channel state measurement, information on processing of the channel state measurement, and information on reporting of the channel state measurement.

6. The apparatus according to claim 5, wherein the information on a measured resource for the sub frame comprises: a time domain location, a frequency domain location, or a spatial domain location, of a resource measured by the user equipment;
the information on a measured signal comprises: a cell-specific reference signal (CRS), a channel state information reference signal (CSI-RS), a demodulation reference signal (DM-RS), or a UE-specific reference signal;
the information on a type of the channel state measurement comprises: interference measurement, signal to interference and noise ratio measurement, or signal strength measurement;
the information on processing of the channel state measurement comprises: information on averaging a measurement result of the subframe and a previous measurement result of the same category, or information on averaging a measurement result of the subframe and a previous measurement result of the same category within a predefined time period or a predefined number of subframes, or information on overriding a previous measurement result of the same type with a measurement result of the subframe;
and the information on reporting of the channel state measurement comprises: information on periodic reporting or information on aperiodic reporting.

7. The apparatus according to claim 6, wherein,
the information on periodic reporting comprises: a reporting period and/or a resource location used by reporting a measurement result, or a triggering message and/or a location where a triggering message is transmitted;
and the information on aperiodic reporting comprises: a triggering message and/or a location where a triggering message is transmitted and/or a resource location used by reporting a measurement result.

8. The apparatus according to claim 4, wherein when the related information is the indication information corresponding to the configuration information, the notifying unit is configured to notify in advance the configuration information and a corresponding relationship between the configuration information and the indication information to the user equipment.

9. The apparatus according to claim 1, wherein the related information is carried via a radio resource control message or a physical layer message.

10. The apparatus according to claim 4, wherein the indication information is a channel state information process ID.

11. A channel state measurement apparatus, configured in a user equipment, wherein the apparatus comprises:
a receiving unit configured to receive related information of channel state measurement of a subframe notified by a base station in a case where the base station determines that a downlink transmission point of a certain user equipment in the subframe is changed; and
a processing unit configured to perform channel state measurement according to the related information.

12. The apparatus according to claim 11, wherein the related information comprises configuration information of the channel state measurement and/or indication information corresponding to the configuration information.

13. The apparatus according to claim 12, wherein the configuration information comprises one or more pieces of following information:
information on a measured resource for the subframe, information on a measured signal transmitted on the measured resource, information on a type of the channel state measurement, information on processing of the channel state measurement, and information on reporting of the channel state measurement.

14. The apparatus according to claim 13, wherein the information on a measured resource for the subframe comprises: a time domain location, a frequency domain location, or a spatial domain location, of a measured resource by the user equipment;
the information on a measured signal comprises: a CRS, a CSI-RS, a DM-RS, or a UE-specific reference signal;
the information on a type of the channel state measurement comprises: interference measurement, signal to interference and noise ratio measurement, or signal strength measurement;
the information on processing of the channel state measurement comprises: information on averaging a measurement result of the subframe and a previous measurement result of the same category, or information on averaging a measurement result of the subframe and a previous measurement result of the same category within a predefined time period or a predefined number of subframes, or information on overriding a previous measurement result of the same type with a measurement result of the subframe;
and the information on reporting of the channel state measurement comprises: information on periodic reporting or information on aperiodic reporting.

15. The apparatus according to claim 14, wherein,
the information on periodic reporting comprises: a reporting period and/or a resource location used by reporting a measurement result, or a triggering message and/or a location where a triggering message is transmitted;
and the information on aperiodic reporting comprises: a triggering message and/or a location where a triggering message is transmitted and/or a resource location used by reporting a measurement result.

16. The apparatus according to claim 12, wherein when the related information is the indication information corresponding to the configuration information, the receiving unit is configured to receive in advance the configuration information and a corresponding relationship between the configuration information and the indication information notified by the base station.

17. The apparatus according to claim 11, wherein the related information is carried via an RRC message or a physical layer message.

18. The apparatus according to claim 11, wherein the indication information is a channel state information process ID.

19. A communication system, comprising:
a base station configured to determine whether a downlink transmission point of a certain user equipment in a subframe is changed, configure related information of channel state measurement of the subframe in a case where a determined result is yes, and notify the related information to one or more UEs within a range of the base station, such that the one or more UEs perform channel state measurement according to the related information; and
the user equipment configured to receive the related information notified by the base station, and perform channel state measurement according to the related information.

20. The communication system according to claim 19, wherein in a case where the downlink transmission point of the certain user equipment in the subframe is changed from a first transmission point to a second transmission point, or the certain user equipment is changed from uplink serving by a first transmission point to downlink serving by a second transmission point in the subframe, the base station determines that the downlink transmission point of the certain user equipment is changed in a subframe.
